(19) Europäisches Patentamt / European Patent Office / Office européen des brevets

(11) **EP 3 130 561 A1**

(12) **EUROPEAN PATENT APPLICATION**
published in accordance with Art. 153(4) EPC

(43) Date of publication:
**15.02.2017 Bulletin 2017/07**

(51) Int Cl.:
*C01B 33/20* (2006.01)  *B01J 20/20* (2006.01)
*B01J 20/30* (2006.01)

(21) Application number: **15761381.1**

(22) Date of filing: **24.02.2015**

(86) International application number:
**PCT/JP2015/055162**

(87) International publication number:
**WO 2015/137106 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.03.2014  JP 2014049200**

(71) Applicant: **Toyo Tanso Co., Ltd.**
**Osaka-shi, Osaka 555-0011 (JP)**

(72) Inventors:
• **MORISHITA, Takahiro**
  **Osaka-shi**
  **Osaka 555-0011 (JP)**

• **ORIKASA, Hironori**
  **Osaka-shi**
  **Osaka 555-0011 (JP)**
• **TOYODA, Masahiro**
  **Oita-shi**
  **Oita 870-1192 (JP)**
• **TSUMURA, Tomoki**
  **Oita-shi**
  **Oita 870-1192 (JP)**

(74) Representative: **Glawe, Delfs, Moll**
**Partnerschaft mbB**
**von Patent- und Rechtsanwälten**
**Postfach 13 03 91**
**20103 Hamburg (DE)**

(54) **POROUS CARBON, METHOD FOR PRODUCING SAME, AND ADSORPTION/DESORPTION DEVICE USING POROUS CARBON**

(57) A porous carbon having a high oxidation reaction temperature, a method of manufacturing the porous carbon, and an adsorption/desorption apparatus using the porous carbon are provided. A porous carbon includes mesopores and a carbonaceous wall forming an outer wall of the mesopores, characterized by being composed mainly of hard carbon and having an oxidation reaction temperature of 600°C or higher. It is desirable that the porous carbon have an average interlayer spacing d(002) of 0.350 nm or greater, as determined by an X-ray diffraction method after heating the porous carbon at 2500°C or higher for 30 minutes to 60 minutes.

Fig. 2

**Description**

TECHNICAL FIELD

The present invention relates to porous carbon, a method of manufacturing porous carbon, and an adsorption/desorption apparatus using the porous carbon.

BACKGROUND ART

It has been known that activated carbon may be fabricated by a method in which a source material is heated and carbonized under a non-oxidizing atmosphere. Examples of the source material include: plant-originating source materials such as lignin, cellulosic substances including wood pulp, saw dust, coconut husk, cottonseed hull, and chaff, starchy substances including foxtail millet, Japanese barnyard millet, and corn; mineral-originating source materials such as coal, tar, and petroleum pitch; and synthetic resins such as phenolic resin and polyacrylonitrile. The techniques for treating the carbonized substances (activated carbon) of these source materials with a chemical agent to activate the carbonized substances are also well known.

Recently, it has been confirmed that activated carbon having a specific surface area as high as 3000 $m^2$/g can be obtained by using potassium hydroxide as an activator agent, mixing an organic resin with the activator agent, and heating it under a non-oxidizing atmosphere, which has drawn attention (see Patent Literature 1). However, this technique is not suitable for industrial scale production.

In view of such problems, a method of fabricating activated carbon has been proposed that includes a step of mixing an organic resin with at least one alkaline-earth metal compound selected from an oxide, a hydroxide, a carbonate, and an organic salt of an alkaline-earth metal, and sintering the mixture in a non-oxidizing atmosphere (see Patent Literature 2).

CITATION LIST

Patent Literature

[Patent Literature 1] Japanese Published Unexamined Patent Application No. H9(1997)-086914
[Patent Literature 2] Japanese Published Unexamined Patent Application No. 2006-062954

SUMMARY OF INVENTION

TECHNICAL PROBLEM

However, a problem with the above-described conventional techniques is that the porous carbon produced by the conventional techniques results in a lower oxidation reaction temperature.

In view of the foregoing, it is an object of the present invention to provide porous carbon having a high oxidation reaction temperature, a method of manufacturing the porous carbon, and an adsorption/desorption apparatus using the porous carbon.

SOLUTION TO PROBLEM

In order to accomplish the foregoing object, the present invention provides a porous carbon comprising mesopores and a carbonaceous wall forming an outer wall of the mesopores, the porous carbon characterized by being composed mainly of hard carbon and having an oxidation reaction temperature of 600°C or higher.

ADVANTAGEOUS EFFECTS OF INVENTION

The present invention achieves a significant advantageous effect of providing a high oxidation reaction temperature.

BRIEF DESCRIPTION OF DRAWINGS

[Fig. 1] Fig. 1 illustrates a manufacturing process of the present invention, wherein Fig. 1(a) is an illustrative view showing the chemical formula of a source material, Fig. 1(b) is an illustrative view showing the source material that has been heat-treated, and Fig. 1(c) is an illustrative view showing porous carbon.

[Fig. 2] Fig. 2 is a graph showing the relationship between carbon weight and temperature in carbon A1.

[Fig. 3] Fig. 3 is a graph showing the relationship between carbon weight and temperature in carbon A2.

[Fig. 4] Fig. 4 is a graph showing the relationship between carbon weight and temperature in carbon A3.

[Fig. 5] Fig. 5 is a graph showing the relationship between carbon weight and temperature in carbon A4.

[Fig. 6] Fig. 6 is a graph showing the relationship between carbon weight and temperature in carbon A5.

[Fig. 7] Fig. 7 is a graph showing the relationship between carbon weight and temperature in carbon A6.

[Fig. 8] Fig. 8 is a graph showing the relationship between carbon weight and temperature in carbon A7.

[Fig. 9] Fig. 9 is a graph showing the relationship between carbon weight and temperature in carbon Z.

DESCRIPTION OF EMBODIMENTS

A porous carbon of the present invention comprises mesopores and a carbonaceous wall forming an outer wall of the mesopores, characterized by being composed mainly of hard carbon and having an oxidation reaction temperature of 600°C or higher.

The just-described structure achieves a significant advantageous effect of providing a high oxidation reaction temperature. When the porous carbon is composed mainly of hard carbon, it exhibits excellent heat resistance. Therefore, the porous carbon shows a high oxidation reaction temperature and moreover provides excellent electrical insulation. Furthermore, because the powder strength increases, the particle size variation becomes smaller even when an external force is applied thereto.

Herein, the phrase "being composed mainly of hard carbon" refers to one in which the proportion of hard carbon is equal to or greater than 90 mass %. It should be noted that it is desirable that the proportion of hard carbon be 95 mass % or greater, more desirably 99 mass % or greater, and what is most desirable is that the porous carbon consists entirely of hard carbon.

It is desirable that the porous carbon have an average interlayer spacing d(002) of 0.350 nm or greater, wherein the average interlayer spacing d(002) is determined by an X-ray diffraction method after heating the porous carbon at 2500°C for 30 minutes to 60 minutes.

Because it is considered that the porous carbon is graphitized when it is heat-treated at 2500°C for 30 minutes to 60 minutes, the average interlayer spacing d(002) of (002) plane of the porous carbon, as determined by an X-ray diffraction method, is defined under that condition.

In the present description herein, the term "hard carbon" refers to carbon that results in an average interlayer spacing d(002) of 0.340 nm or greater when heated at 2500°C for 30 minutes to 60 minutes, and the term "soft carbon" refers to carbon that results in an average interlayer spacing d(002) of less than 0.340 nm when heated at 2500°C for 30 minutes to 60 minutes.

It is desirable that the specific surface area of the porous carbon be from 500 $m^2$/g or greater.

If the specific surface area of the porous carbon is less than 500 $m^2$/g, the amount of pores formed is insufficient. Therefore, when the porous carbon is used as an adsorbing/desorbing agent, it may show poor gas adsorption capability. In general, when a porous carbon is heat-treated, the specific surface area of the porous carbon tends to decrease. However, when the porous carbon is composed mainly of hard carbon as is the case with the present invention, the specific surface area is unlikely to decrease. As a result, the degradation of gas adsorption capability is inhibited. It should be noted that although the upper limit of the specific surface area is not limited, the upper limit is practically 1700 $m^2$/g.

It is desirable that the volume of the mesopores be 0.2 mL/g or greater.

If the volume of the mesopores is less than 0.2 mL/g, it is difficult to ensure a sufficient specific surface area as described above when the porous carbon is used as an adsorbing/desorbing agent, and moreover, the gas adsorption capability may become poor in the case when the relative pressure is high. In general, when a porous carbon is heat-treated, the volume of the mesopores of the porous carbon tends to be small. However, when the porous carbon is composed mainly of hard carbon as is the case with the present invention, the volume of the mesopores is unlikely to be small. As a result, it is possible to prevent the gas adsorption capability from degrading in the case when the relative pressure is high. It should be noted that although the upper limit of the volume of the mesopores is not limited, the upper limit is practically 1.0 mL/g.

It is desirable that the porous carbon have a true density of 1.0 g/cc.

If the true density is less than 0.1 g/cc, it is difficult to ensure a sufficient specific surface area, and the carbonaceous wall may not be able to keep its shape. In general, when a porous carbon is heat-treated, the true density of the porous carbon tends to be lower. However, when the porous carbon is composed mainly of hard carbon as is the case with the present invention, the true density is unlikely to become lower. As a result, it is possible to prevent the carbonaceous wall from becoming unable to keep its shape. It should be noted that although the upper limit of the true density is not limited, the upper limit is practically 1.9 g/cc.

The present invention also provides a method of manufacturing a porous carbon, comprising: a first step of preparing a carbonized material having mesopores from a hydrate of a metal organic acid; and a second step of heat-treating the carbonized material at a temperature of from 1500°C to 3000°C for 1 minute to 60 minutes under a non-oxidizing atmosphere.

The heat treatment temperature and the heat treatment duration are restricted for the following reasons.

If the heat treatment temperature is less than 1500°C, or if the heat treatment duration is less than 1 minute, it means that the heat treatment is insufficient, resulting in problems such as an undesirably low oxidation reaction temperature, an excessively large specific surface area, an excessively large mesopore volume, and an excessively high true density. On the other hand, if the heat treatment temperature exceeds 3000°C, or if the heat treatment duration exceeds 60 minute, it means that the heat treatment is excessive, resulting in problems such as an excessively small specific surface area, an excessively small mesopore volume, and an excessively low true density.

It should be noted that the non-oxidizing atmosphere includes an argon gas atmosphere and a nitrogen atmosphere, as well as a reduced pressure atmosphere [133 Pa (1 torr) or lower].

It is desirable that the heating rate in the heat treatment be from 5°C/min to 30°C/min.

The invention also provides an adsorption/desorption apparatus comprising one of the foregoing porous carbon as an adsorbing/desorbing agent.

The conventionally-used activated carbon has an oxidation reaction temperature of 300°C or lower, so it cannot be used as the adsorbing/desorbing agent under an atmosphere at 300°C or higher. The porous carbon of the present invention has an oxidation reaction temperature of 600°C or higher, so it can keep a porous structure even under a high temperature. Therefore, it can be used as an adsorbing/desorbing agent even under a circumstance that requires oxidation resistance at 300°C or higher. It should be noted that a metal filter may appear conceivable as an example of the adsorption/desorption apparatus that is usable at a high temperature, but the pore size of the metal filter is significantly greater than that of porous carbon. Therefore, the metal filter has considerably poorer adsorption/desorption performance than the adsorption/desorption apparatus that uses the porous carbon of the present invention.

It is desirable that the carbonaceous wall have a three-dimensional network structure. It is also desirable that the mesopores are open pores, and that the mesopores have a structure in which the hollow portions are connected to each other.

Such structures serve to make a smooth gas flow when using the porous carbon of the present invention as an adsorbing/desorbing agent. As a result, the porous carbon can capture gas more easily, resulting in improved gas adsorption capability.

Hereinbelow, specific embodiments of the present invention will be described.

The porous carbon of the present invention uses, as the source material, a hydrate of a metal organic acid (such as magnesium citrate, magnesium oxalate, calcium citrate, and calcium oxalate) the state of which changes into an oxide (such as magnesium oxide) as template particles and carbon during the thermal decomposition process by a heat treatment. Then, this source material is carbonized in a non-oxidizing atmosphere or a reduced pressure atmosphere at a temperature of, for example, 500°C or higher, and thereafter washed to remove the oxide to prepare a carbonized material. Thereafter, the amorphous porous carbon is heat-treated in a non-oxidizing atmosphere at 1500°C to 3000°C for 1 minute to 60 minutes. Thus, the porous carbon of the present invention is obtained.

The just-described amorphous porous carbon has a multiplicity of mesopores. Micropores are formed at the locations that face the mesopores in the carbonaceous wall that is formed between the mesopores. During the heat treatment of the carbonized material, the presence of the multiplicity of mesopores is maintained. In the present description, the pores having a pore diameter of less than 2 nm are referred to as "micropores", and the pores having a pore diameter of from 2 nm to 50 nm are referred to as "mesopores".

Herein, the source material for preparing the carbonized material is not limited to a hydrate of a metal organic acid as described above, but it is also possible to use a material obtained by wet-blending or dry-blending an organic resin and an oxide (i.e., template particles).

Examples of the oxide (i.e., template particles) include an oxide of alkaline-earth metal. Examples of the alkaline-earth metal include magnesium, calcium, strontium, and barium. Preferable among these examples are magnesium and calcium, and particularly preferable is magnesium. The form of the oxide is not limited to a particular form, and it is possible to employ various forms, such as a powder form, a pellet form, a particulate form, and a paste form. Particularly preferable is a powder form or particulate form, which is easy to blend uniformly with the organic resin and is effective to make the carbide have a porous structure. The ratio of the oxide to the organic resin is not limited to a specific ratio. However, in order to promote the development of the porous structure in the resulting porous carbon, it is particularly preferable that the ratio of the oxide be in the range of from 40 parts by mass to 700 parts by mass with respect to 100 parts by mass of the organic resin. If the ratio of the oxide is less than 40 parts by mass, the effect of developing the porous structure for the porous carbon tends to be insufficient. On the other hand, there is no upper limit to the ratio of the oxide from the viewpoint of developing the porous structure of the porous carbon. However, the effect almost saturates at a ratio of 700 parts by mass, so even if the oxide is added beyond that amount, the specific surface area does not increase any further, unduly increasing the amount of the oxide used. Moreover, when removing the oxide after the carbonization process, workability worsens, which is also undesirable. A more preferable lower limit of the ratio of the oxide is 100 parts by mass, and a more preferable upper limit thereof is 300 parts by mass. The form of the mixture of the organic resin and the oxide is also not limited to a specific form, and any form may be used. The most common example is a uniform mixture of solid substances, such as powder or particulate substances, with each other. Another example is one in which the organic resin is heated and melted, then the oxide is uniformly dispersed in the melt, and thereafter the resultant material is secondarily formed into a desired shape, such as a spherical form, a pellet form, and an ingot form. Furthermore, other examples include a mixture solution of the organic resin and the oxide each of which is dissolved in an organic solvent, water, or the like, a slurry thereof, and a dried substance thereof.

Preferable examples of the organic resin include a polyimide having at least one nitrogen atom in its unit structure, and a resin having a carbon yield of from 40 weight % to 85 weight %, such as a phenolic resin.

The above-described polyimide containing at least one nitrogen atom in its unit structure can be obtained by polycondensation of an acid component and a diamine component. However, in this case, it is necessary that either one of or both of the acid component and the diamine component contain at least one nitrogen atom.

Specifically, a polyamic acid, which is the precursor of the polyimide, is deposited, and the solvent is removed by heating, to obtain a polyamic acid film. Next, the obtained polyamic acid film is subjected to heat imidization at 200°C or higher, so that the polyimide can be fabricated.

Examples of the diamine include aromatic diamines, such as p-phenylenediamine (PPD) and dioxydianiline. It is also possible that two or more of the foregoing aromatic diamines may be used in combination as the diamine component.

Examples of the acid component include 3,4,3',4'-biphenyltetracarboxylic dianhydride (BPDA) and pyromellitic dianhydride (PMDA).

Examples of the organic solvent used as the solvent for the polyimide precursor include N-methyl-2-pyrrolidone and dimethylformamide.

The technique for imidization may follow either heat imidization or chemical imidization, as indicated by known methods [for example, see "Shin Kobunshi Jikkengaku, Vol. 3, Kobunshi no Gosei·Hanno (2)" (Experimental Polymer Science, New Edition, Vol. 3, Synthesis and reaction of polymers [2]), edited by Society of Polymer Science, Japan, Kyoritsu Shuppan, Tokyo, March 28, 1996, p. 158]. These methods of imidization do not limit the present invention.

Furthermore, it is possible to use a resin having a carbon yield of 40% or higher, such as petroleum-based tar pitch and an acrylic resin, other than the polyimide.

As the cleaning solution for removing the oxide, it is preferable to use a dilute acid of 2 mol/L or lower of a common inorganic acid, such as hydrochloric acid, sulfuric acid, nitric acid, citric acid, acetic acid, and formic acid. It is also possible to use hot water of 80°C or higher.

EXAMPLES

[First Embodiment]

(Example 1)

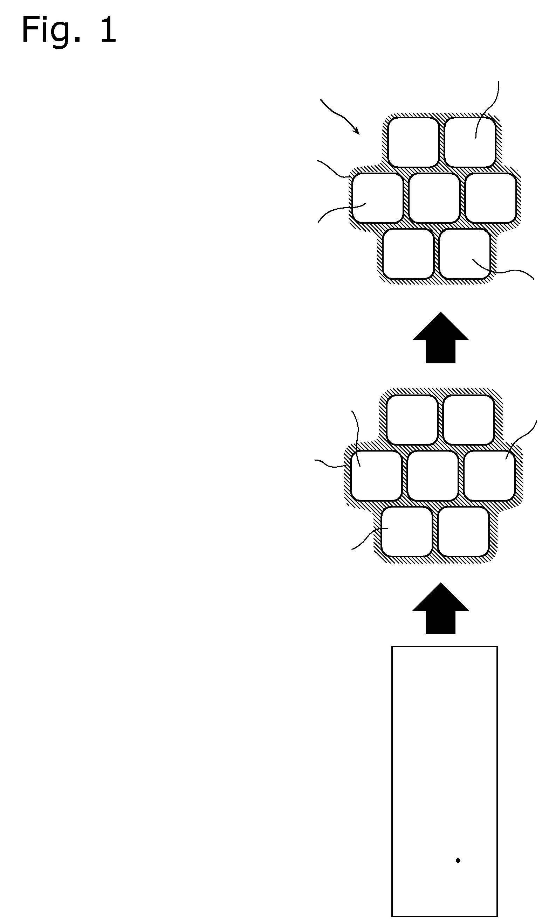

First, trimagnesium dicitrate nonahydrate [$Mg_3(C_6H_5O_7)_2 \cdot 9H_2O$] serving both as a carbon precursor and a template particle precursor as shown in Fig. 1(a) was prepared, and this was carbonized in an argon atmosphere at 900°C for 1 hour. Thereby, a carbonized substance having MgO as the template particles and a carbonaceous wall 3, as shown in Fig. 1(b), was obtained. Next, the resultant carbonized substance was washed with a sulfuric acid solution added at a concentration of 1 mol/L, to dissolve the MgO away completely, whereby a porous carbon 5 having a multiplicity of mesopores 4 as shown in Fig. 1(c) was obtained. Lastly, the resulting amorphous porous carbon was heat-treated under the following conditions to obtain a porous carbon.

- Heat treatment conditions

Atmosphere: Argon gas atmosphere
Heat treatment temperature: 1800°C (the heating rate is 20°C/min.)
Heat treatment time: 30 minutes

The porous carbon prepared in this manner is hereinafter referred to as a carbon A1.

(Example 2)

A porous carbon was prepared in the same manner as described in Example 1 above, except that the heat treatment temperature for the amorphous porous carbon was set at 2000°C.
The porous carbon prepared in this manner is hereinafter referred to as a carbon A2.

(Example 3)

A porous carbon was prepared in the same manner as described in Example 1 above, except that the heat treatment temperature for the amorphous porous carbon was set at 2200°C.
The porous carbon prepared in this manner is hereinafter referred to as a carbon A3.

(Example 4)

A porous carbon was prepared in the same manner as described in Example 1 above, except that the heat treatment temperature for the amorphous porous carbon was set at 2400°C.
The porous carbon prepared in this manner is hereinafter referred to as a carbon A4.

(Example 5)

A porous carbon was prepared in the same manner as described in Example 1 above, except that the heat treatment temperature for the amorphous porous carbon was set at 2500°C.
The porous carbon prepared in this manner is hereinafter referred to as a carbon A5.

(Example 6)

A porous carbon was prepared in the same manner as described in Example 1 above, except that the heat treatment temperature for the amorphous porous carbon was set at 2700°C.
The porous carbon prepared in this manner is hereinafter referred to as a carbon A6.

(Example 7)

A porous carbon was prepared in the same manner as described in Example 1 above, except that the heat treatment temperature for the amorphous porous carbon was set at 3000°C.
The porous carbon prepared in this manner is hereinafter referred to as a carbon A7.

(Comparative Example)

A porous carbon was prepared in the same manner as described in Example 1 above, except that the heat treatment for the amorphous porous carbon was not performed.
The porous carbon prepared in this manner is hereinafter referred to as a carbon Z.

(Experiment 1)

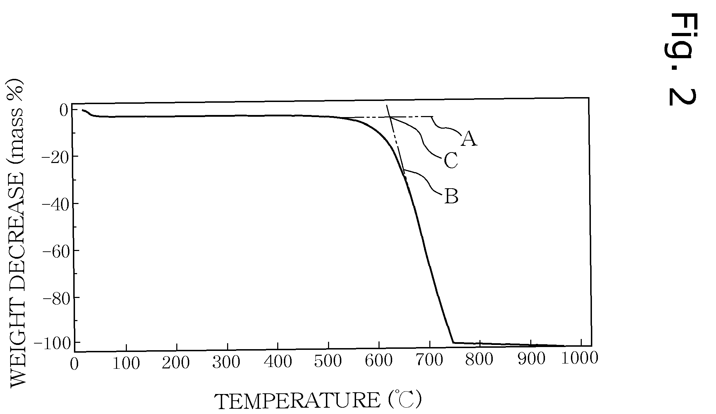

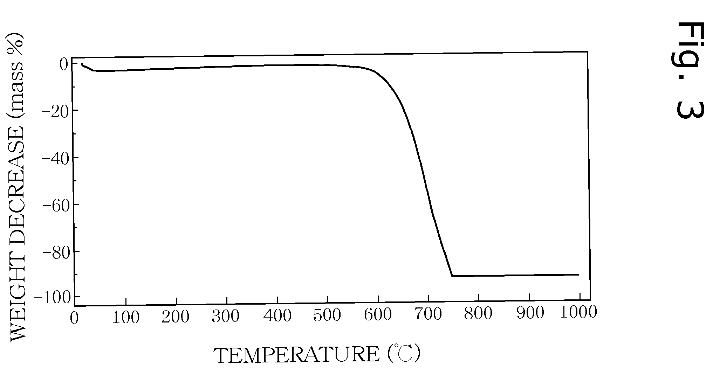

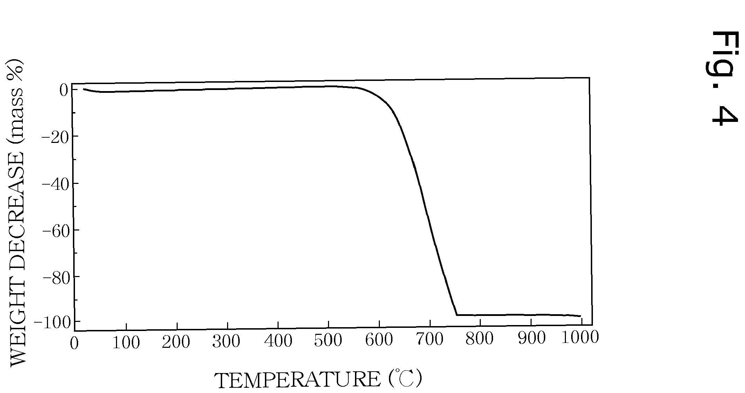

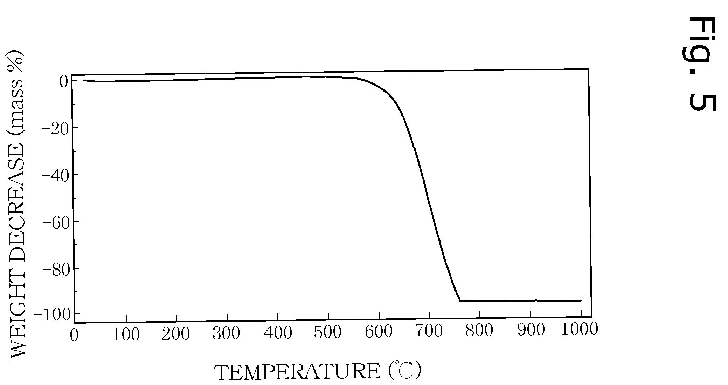

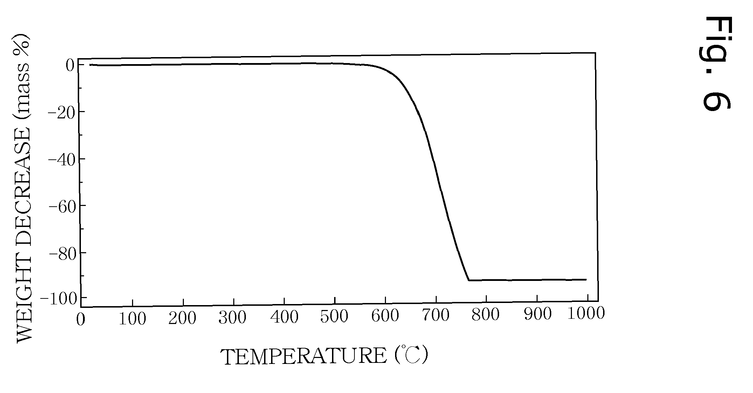

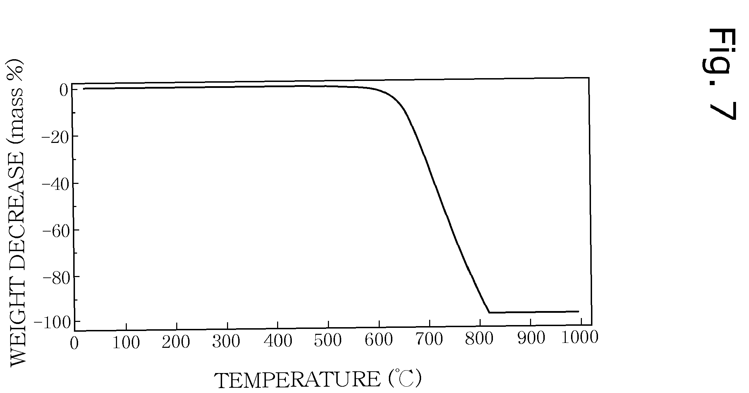

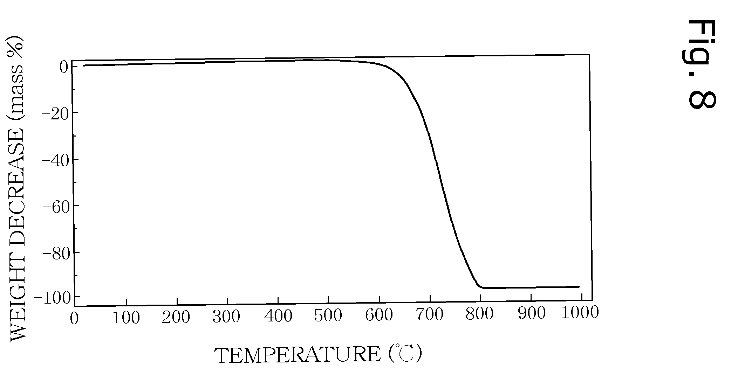

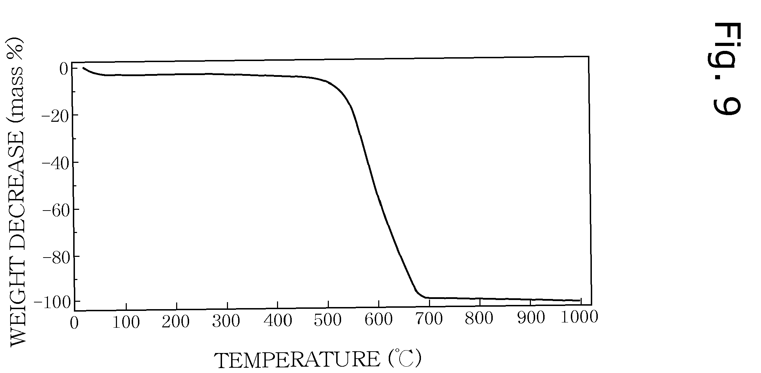

The above-described carbons A1 to A7 and Z were heated under the air atmosphere, and the relationship between the carbon weight and the temperature was investigated. The results are shown in Figs. 2 to 9. Fig. 2 is a graph for the carbon A1, Fig. 3 a graph for the carbon A2, Fig. 4 a graph for the carbon A3, Fig. 5 a graph for the carbon A4, Fig. 6 a graph for the carbon A5, Fig. 7 a graph for the carbon A6, Fig. 8 a graph for the carbon A7, and Fig. 9 a graph for the carbon Z. In addition, the oxidation reaction temperature of each of the carbons A1 to A7 and Z was determined from Figs. 2 to 9. The results are shown in Table 1.
Here, the term "oxidation reaction temperature" means, as indicated in Fig. 2, for example, a temperature at the intersection point C of an imaginary extension line A of the portion of the graph in which the weight is almost constant (i.e., the portion that is substantially parallel to the horizontal axis) and an imaginary extension line B of the portion of the graph in which the weight changes significantly.
Note that Table 1 also shows the specific surface area, the mesopore volume, and the true density of each of the carbons A1 to A7 and Z. The specific surface area was calculated using the BET method by causing each of the samples to adsorb a nitrogen gas at a relative pressure at a temperature of 77 K to obtain an adsorption isotherm. The mesopore volume was calculated by calculating the total pore volume calculated from the adsorption isotherm and obtaining the micropore volume by the DA method, and subtracting the obtained micropore volume from the calculated total pore volume. The true density was measured based on the pycnometer method using a Gay-Lussac specific gravity bottle as the pycnometer and 1-butanol as the liquid penetrant.

TABLE 1

| Carbon | Heat treatment | | Oxidation reaction temperature (°C) | Specific surface area (m²/g) | Mesopore volume (mL/g) | True density (g/cc) |
|---|---|---|---|---|---|---|
| | Heat treatment | Temperature (°C) | | | | |
| A1 | | 1800 | 620 | 1680 | 0.98 | 1.83 |
| A2 | | 2000 | 620 | 1550 | 0.99 | 1.63 |
| A3 | | 2200 | 625 | 1310 | 0.91 | 1.63 |
| A4 | Yes | 2400 | 645 | 1250 | 0.75 | 1.51 |
| A5 | | 2500 | 650 | 998 | 0.47 | 1.35 |
| A6 | | 2700 | 653 | 512 | 0.23 | 1.14 |
| A7 | | 3000 | 672 | 501 | 0.22 | 1.15 |
| Z | No | - | 575 | 1705 | 1.80 | 1.93 |

As clearly seen from Table 1, the carbon Z shows an oxidation reaction temperature of 575°C, while the carbons A1 to A7 an oxidation reaction temperature of from 620°C to 672°C. Thus, it is demonstrated that the carbons A1 to A7 have a higher oxidation reaction temperature than the carbon Z. It should be noted that the specific surface area, the true density, and the mesopore volume are smaller in the carbons A1 to A7 than in the carbon Z. However, there is no problem with the carbons A1 to A7 in practical use because the carbons A1 to A7 have a specific surface area of 500 m²/g or greater, a mesopore volume of 0.2 mL/g or greater, and a true density of 1.0 g/cc or greater.

[Second Embodiment]

(Examples 1 to 5)

The respective carbons A1, A3, A5, A6, and A7, which were shown in Examples 1, 3, 5, 6, and 7, respectively, were used as Examples 1 to 5.

(Comparative Example 1)

A porous carbon was prepared in the same manner as described in Example 1 in the First Embodiment, except that trimagnesium dicitrate [one that is represented by $Mg_3(C_6H_3O_7)_2$, not a hydrate] serving as a carbon precursor and a template particle precursor was used, and that the heat treatment duration was set to 60 minutes.
The porous carbon prepared in this manner is hereinafter referred to as a carbon Y1.

(Comparative Example 2)

A porous carbon was prepared in the same manner as described in Comparative Example 1 above, except that the heat treatment temperature for the amorphous porous carbon was set at 2200°C.
The porous carbon prepared in this manner is hereinafter referred to as a carbon Y2.

(Comparative Example 3)

A porous carbon was prepared in the same manner as described in Comparative Example 1 above, except that the heat treatment temperature for the amorphous porous carbon was set at 2500°C.
The porous carbon prepared in this manner is hereinafter referred to as a carbon Y3.

(Comparative Example 4)

A porous carbon was prepared in the same manner as described in Comparative Example 1 above, except that the heat treatment temperature for the amorphous porous carbon was set at 2800°C.
The porous carbon prepared in this manner is hereinafter referred to as a carbon Y4.

(Experiment 1)

For each of the carbons A3, A5 to A7, and Y2 to Y4, the proportion of hard carbon was determined, and the average interlayer spacing d(002) of (002) plane as determined by an X-ray diffraction method (radiation source: CuKα rays) [which may be also simply referred to as average interlayer spacing d(002) hereinafter] was also determined. The results are shown in Table 2. In addition, the oxidation reaction rate of each of the carbons A5 and Y3 was determined. The results are shown in Table 2.
The average interlayer spacing d(002) was determined in the following manner. When two or more diffraction peaks of 002 plane were present in the diffraction profile obtained by the X-ray diffraction method, respective d(002) values were calculated from the Bragg's equation [$2d\sin\theta = \lambda(\lambda = 1.5148\text{Å})$] using $2\theta$ of the respective diffraction peaks, and thereafter, the average value was calculated. Then, the obtained average value was employed as the average interlayer spacing d(002). When there is one diffraction peak of 002 plane, the d(002) value was calculated from the Bragg's equation [$2d\sin\theta = \lambda(\lambda = 1.5148\text{Å})$] using $2\theta$ of the diffraction peak, and the obtained value was employed as the average interlayer spacing d(002).
The proportion of hard carbon was calculated from the average interlayer spacing d(002) and the graph of thermal decomposition. Specifically, from the value of the average interlayer spacing d(002), it is determined if the sample is composed only of hard carbon, or if the sample is composed only of soft carbon, or if the sample is composed of a mixture of soft carbon and hard carbon. Then, when the sample is composed of a mixture of soft carbon and hard carbon, the proportion of soft carbon and hard carbon is calculated from the area percentage of the graph of thermal decomposition.
The oxidation reaction rate was determined in the following manner. First, a sample having a dry weight of 1 g was placed in an alumina crucible and retained at 700°C for 1 hour in the air. Thereafter, the sample was naturally cooled down, and the residue was weighed. The obtained weight was defined as X g. Then, the oxidation reaction rate was obtained from the following equation (1).

$$\text{Oxidation reaction rate} = \{1\text{ g} - \text{X g}/1\text{g}\} \times 100 \quad \dots \quad (1)$$

TABLE 2

| Carbon | Heat treatment temperature (°C) | Proportion of hard carbon (mass %) | Average interlayer spacing d(002) (nm) | Oxidation reaction rate (mass %) |
|---|---|---|---|---|
| A3 | 2200 | 100 | 0.362 | - |
| Y2 | | 89 | 0.348 | - |
| A5 | 2500 | 100 | 0.355 | 17 |
| Y3 | | 71 | 0.347 | 38 |
| A6 | 2700 | 100 | 0.351 | - |
| Y4 | 2800 | 56 | 0.346 | - |
| A7 | 3000 | 100 | 0.350 | - |

As clearly seen from Table 2 above, the proportion of hard carbon is from 56% to 89% in the carbons Y2 to Y4. In contrast, it is observed that the proportion of hard carbon is 100% in all the carbons A3 and A5 to A7. This is believed to be due to the following reason. In each of the carbons A3 and A5 to A7, $H_2O$ is present during the carbonizing, which means that oxygen is present, because it uses a hydrate (trimagnesium dicitrate nonahydrate) as the source material. As a result, the citric acid is infusibilized, so the proportion of hard carbon is increased. In contrast, each of the carbons Y2 to Y4, $H_2O$ is absent during the carbonizing, which means that oxygen is absent, because it does not use any hydrate as the source material. As a result, the citric acid undergoes polycondensation and is fused, so the proportion of hard carbon becomes lower.

In addition, the carbons Y2 to Y4 show an average interlayer spacing d(002) of from 0.346 nm to 0.348 nm. In contrast, it is observed that the carbons A3 and A5 to A7 show an average interlayer spacing d(002) of from 0.350 nm to 0.362 nm. This is believed to be due to the fact that the carbons A3 and A5 to A7 contain a higher proportion of hard carbon than the carbons Y2 to Y4.

Furthermore, the carbon Y3 shows an oxidation reaction rate of 38 mass %. In contrast, it is observed that the carbon A5 shows an oxidation reaction rate of 17 mass %, which indicates that the carbon A5 has higher oxidation resistance than the carbon Y3. This is also believed to be due to the fact that the carbon A5 contains a higher proportion of hard carbon than the carbon Y3.

(Experiment 2)

The electrical conductivity was determined for each of the carbons A1, A3, A5 and Y1 to Y3. The results are shown in Table 3. The electrical conductivity was determined by filling 200 mg of each of the samples in the cylinder portion of a powder electrical conductivity measurement cell (made by Takumi Giken Corp.) and measuring the electrical resistance while applying a pressure of 20 MPa thereto.

TABLE 3

| Carbon | Heat treatment temperature (°C) | Electrical conductivity (S/m) |
| --- | --- | --- |
| A1 | 1800 | 72 |
| Y1 | | 99 |
| A3 | 2200 | 68 |
| Y2 | | 120 |
| A5 | 2500 | 65 |
| Y3 | | 159 |

As clearly seen from Table 3 above, the carbons Y1 to Y3 have an electrical conductivity of from 99 S/m to 159 S/m, while the carbons A1, A3, and A5 have an electrical conductivity of 65 S/m to 72 S/m. The reason why the carbons A1, A3, and A5 show a lower electrical conductivity than the carbons Y1 to Y3 is believed to be that the carbons A1, A3, and A5 contain a higher proportion of hard carbon than the carbons Y1 to Y3. Note that for the carbons Y1 to Y3, the electrical conductivity becomes higher as the heat treatment temperature becomes higher. In contrast, for the carbons A1, A3, and A5, the electrical conductivity becomes lower as the heat treatment temperature becomes higher.

INDUSTRIAL APPLICABILITY

The present invention is applicable to, for example, a chemical filter, a metal mesh filter, a column filler, and a liquid filter.

REFERENCE SIGNS LIST

1 -- Polyamic acid resin (Imide-based resin)
2 -- Magnesium oxide
3 -- Carbonaceous wall
4 -- Mesopore
5 -- Porous carbon

**Claims**

1. A porous carbon comprising mesopores and a carbonaceous wall forming an outer wall of the mesopores, **characterized by**:

being composed mainly of hard carbon and having an oxidation reaction temperature of 600°C or higher.

2. The porous carbon according to claim 1, having an average interlayer spacing d(002) of 0.350 nm or greater, wherein the average interlayer spacing d(002) is determined by X-ray diffraction method after heating the porous carbon at 2500°C for 30 minutes to 60 minutes.

3. The porous carbon according to any claim 1 or 2, having a specific surface area of 500 $m^2$/g or greater.

4. The porous carbon according to any one of claims 1 through 3, wherein the volume of the mesopores is 0.2 mL/g or greater.

5. The porous carbon according to any one of claims 1 through 4, having a true density of 1.0 g/cc or greater.

6. A method of manufacturing a porous carbon, comprising:

   a first step of preparing a carbonized material having mesopores from a hydrate of a metal organic acid; and
   a second step of heat-treating the carbonized material at a temperature of from 1500°C to 3000°C for 1 minute to 60 minutes under a non-oxidizing atmosphere.

7. The method of manufacturing a porous carbon according to claim 6, wherein the heating rate in the heat-treating is from 5°C/min to 30°C/min.

8. An adsorption/desorption apparatus **characterized by** comprising the porous carbon according to any one of claims 1 through 5 as an adsorbing/desorbing agent.

# Fig. 1

# Fig. 2

# Fig. 3

# Fig. 4

# Fig. 5

# Fig. 6

EP 3 130 561 A1

# Fig. 7

17

# Fig. 8

# Fig. 9

## INTERNATIONAL SEARCH REPORT

| International application No. |
| --- |
| PCT/JP2015/055162 |

A.   CLASSIFICATION OF SUBJECT MATTER
*C01B31/02*(2006.01)i, *B01J20/20*(2006.01)i, *B01J20/30*(2006.01)i

According to International Patent Classification (IPC) or to both national classification and IPC

B.   FIELDS SEARCHED

Minimum documentation searched (classification system followed by classification symbols)
C01B31/02, B01J20/20, B01J20/30

Documentation searched other than minimum documentation to the extent that such documents are included in the fields searched
Jitsuyo Shinan Koho          1922–1996    Jitsuyo Shinan Toroku Koho    1996–2015
Kokai Jitsuyo Shinan Koho    1971–2015    Toroku Jitsuyo Shinan Koho    1994–2015

Electronic data base consulted during the international search (name of data base and, where practicable, search terms used)
CiNii, WPI, CAplus(STN), JSTPlus(JDreamIII)

C.   DOCUMENTS CONSIDERED TO BE RELEVANT

| Category* | Citation of document, with indication, where appropriate, of the relevant passages | Relevant to claim No. |
| --- | --- | --- |
| A | JP 2014-001093 A  (Toyo Tanso Co., Ltd.),<br>09 January 2014 (09.01.2014),<br>claims; paragraphs [0015], [0016], [0022],<br>[0023]<br>& US 2013/0335883 A1    & KR 10-2013-0141357 A | 1-8 |
| A | JP 2012-218999 A  (Toyo Tanso Co., Ltd.),<br>12 November 2012 (12.11.2012),<br>claims; examples<br>(Family: none) | 1-8 |
| A | JP 2008-013394 A  (Daido Metal Co., Ltd.),<br>24 January 2008 (24.01.2008),<br>claims<br>(Family: none) | 1-8 |

☒  Further documents are listed in the continuation of Box C.     ☐  See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    01 May 2015 (01.05.15) | Date of mailing of the international search report<br>    19 May 2015 (19.05.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/055162

C (Continuation). DOCUMENTS CONSIDERED TO BE RELEVANT

| Category* | Citation of document, with indication, where appropriate, of the relevant passages | Relevant to claim No. |
|---|---|---|
| A | WO 2011/065484 A1 (National Institute of Advanced Industrial Science and Technology), 03 June 2011 (03.06.2011), claims & US 2012/0241691 A1 & EP 2508475 A1 & CN 102741160 A & TW 201135772 A & KR 10-2012-0112475 A | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H91997086914 A

- JP 2006062954 A

**Non-patent literature cited in the description**

- Shin Kobunshi Jikkengaku, Vol. 3, Kobunshi no Go-sei·Hanno (2). Kyoritsu Shuppan, 28 March 1996, vol. 3, 158